(19) Europäisches Patentamt
European Patent Office
Office européen des brevets

(11) **EP 2 747 996 B1**

(12) **FASCICULE DE BREVET EUROPEEN**

(45) Date de publication et mention
de la délivrance du brevet:
**03.10.2018 Bulletin 2018/40**

(21) Numéro de dépôt: **12732644.5**

(22) Date de dépôt: **03.07.2012**

(51) Int Cl.:
**B32B 17/10** *(2006.01)*

(86) Numéro de dépôt international:
**PCT/EP2012/062884**

(87) Numéro de publication internationale:
**WO 2013/026606 (28.02.2013 Gazette 2013/09)**

(54) **VITRAGE ANTI-FEU**

FEUERFESTE VERGLASUNGSEINHEIT

FIRE-RESISTANT GLAZING UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.08.2011 BE 201100504**

(43) Date de publication de la demande:
**02.07.2014 Bulletin 2014/27**

(73) Titulaire: **AGC Glass Europe
1348 Louvain-la-Neuve (BE)**

(72) Inventeurs:
• **DUSOULIER, Laurent
B-6040 Jumet (BE)**
• **HERREMANS, Guillaume
B-6040 Jumet (BE)**

(74) Mandataire: **Le Vaguerèse, Sylvain Jacques
AGC Glass Europe
Technovation Centre
IP Department
Rue Louis Blériot, 12
6041 Gosselies (BE)**

(56) Documents cités:
**EP-A1- 1 398 147      WO-A1-2006/108873
US-A- 4 268 581**

**Description**

La présente invention concerne les vitrages anti-feu du type comprenant des couches intumescentes à base de silicate alcalin hydraté situées entre des feuilles de verre. Ce type de vitrage est très largement employé dans les applications qui requièrent simultanément un produit transparent et d'excellentes propriétés de résistance à l'épreuve du feu.

Selon leur destination la structure de ces vitrages peut varier sensiblement. En particulier les produits devant offrir une protection anti-feu particulièrement performante, comportent souvent plusieurs couches intumescentes chacune étant prise entre deux feuilles de verre.

Les modalités de production des vitrages et des couches intumescentes peuvent présenter des variantes significatives. Elles ont pour but de rendre la fabrication aussi commode tout en gardant intactes les différentes propriétés requises et notamment les qualités optiques.

L'utilisation de silicate alcalin, que la formation des couches soit obtenue par séchage à partir de solution aqueuse de ces silicates, ou par gélification de ces solutions, ne permet pas d'écarter tous les risques de défaut, et notamment ceux liés au vieillissement des couches. De façon habituelle parmi les risques constatés dus au vieillissement, figurent les défauts optiques. Il s'agit notamment d'apparition de bulles ou celle d'un voile qui réduit la transparence du vitrage.

L'étude des défauts les plus fréquents a montré que pour beaucoup ils viennent d'une composition de silicate inadéquate. Un mauvais ajustement des teneurs en eau et du rapport molaire (Rm étant le rapport molaire $SiO_2/M_2O$, M étant un alcalin) entre les constituants, peut favoriser l'apparition de ces défauts. Un facteur extérieur peut aussi déclencher ou accélérer l'apparition de ces défauts. C'est le cas de l'exposition du vitrage à la chaleur. C'est aussi le cas de l'exposition à certains rayonnements, notamment aux rayonnements ultraviolets.

Un suivi rigoureux des compositions utilisées permet de maintenir les couches intumescentes dans des conditions satisfaisantes sur de longues périodes de temps.

A l'expérience cependant il est apparu aux inventeurs que d'autres facteurs sont également susceptibles de favoriser l'apparition des défauts en question. Ils ont ainsi constaté que la formation d'un voile était favorisé lorsque la composition intumescente se trouvait au contact de la feuille de verre sur la face ayant été au contact du bain d'étain dans les fabrications par voie flottée.

Lorsque le vitrage est composé de deux feuilles de verre réunies au moyen de la couche de silicate alcalin, il est possible d'éviter le contact de cette couche en sélectionnant les faces des feuilles de verre de telle sorte que les faces au contact de la composition intumescente n'aient pas été au contact du bain d'étain. Mais les assemblages anti-feu comprennent comme rappelé ci-dessus souvent plus de deux feuilles de verre et dans ce cas les deux faces des feuilles intermédiaires peuvent se trouver au contact de la couche de silicate alcalin, et donc l'une d'entre elle est nécessairement une face "étain".

Pour prévenir l'apparition de défauts liés au contact de la composition intumescente avec la face "étain" de la feuille, l'invention se propose de prévenir toute interaction de la face du verre et de la composition de silicate alcalin par interposition d'une couche faisant écran, et qui soit parfaitement inerte vis-à-vis de la composition de la couche intumescente.

Bien évidemment la couche faisant écran doit préserver les qualités attendues du vitrage. En particulier cette couche doit rester stable dans le temps. Elle ne doit pas modifier de façon significative la transmission lumineuse, et donc être suffisamment transparente. Elle ne doit pas occasionner de réaction impropre à son utilisation dans les épreuves au feu.

De cette dernière condition, il résulte que la couche en question ne doit pas être d'un matériau organique.

Pour avoir des couches inertes au contact de la couche intumescente, les matériaux constituant ces couches doivent notamment résister aux milieux fortement alcalins.

Pour répondre à ces exigences les vitrages anti-feu selon l'invention sont constitués comme indiqué à la revendication 1.

Les couches minérales utilisées pour être suffisamment sont suffisamment minces pour ne pas occasionner une perte de transmission lumineuse qui serait de plus de 5% par rapport à la transmission qui serait celle du vitrage sans la couche écran. De préférence cette réduction de transmission lumineuse ne doit pas excéder 3% et particulièrement pas excéder 1%.

Les matériaux dont peuvent être constituées ces couches écran sont des oxydes connus pour leur grande inertie chimique notamment aux milieux alcalins. Par ailleurs ces matériaux doivent se prêter au mode d'application choisi. Les matériaux sont ceux du groupe comprenant le dioxyde de titane, le dioxyde de titane modifié par l'incorporation d'un métal du groupe comprenant Zr, Nb, Ta, Hf, V, Ce, W, Mo, Al, le métal de modification représentant au plus 40% atomique de l'ensemble des métaux, l'oxyde d'étain, l'oxyde d'étain dopé notamment à l'indium, le stanate de zinc comprenant au plus 50% atomique de Zn, l'oxyde de zinc et l'oxyde de zinc dopé notamment à l'aluminium.

L'épaisseur des couches écran mises en oeuvre peut varier dans de larges mesures pour autant qu'elles répondent aux exigences de résistance et de transparence.

Selon l'invention le mode pour l'application des couches écrans, est le dépôt par pulvérisation cathodique sous vide, avantageusement assisté par magnétron. Cette technique de dépôt n'est pas faite "en ligne". Les feuilles de verre sont traitées "en reprise", autrement dit après la production "float". Elles sont découpées, stockées, transportées et revêtues éventuellement longtemps après leur production.

Les couches produites par pulvérisation cathodique offrent une couverture bien homogène même pour des épaisseurs très faibles. Elles peuvent être de quelques nanomètres. Le plus souvent les couches en question ont une épaisseur qui n'est pas supérieure à 100nm. Avantageusement l'épaisseur est maintenue aussi réduite que possible pour minimiser le coût de production. Ainsi selon l'invention les couches déposées par pulvérisation cathodique n'auront pas une épaisseur supérieure à 200Å, et de façon particulièrement préférée pas supérieure à 100Å .

Les épaisseurs très réduites présentent aussi l'avantage de conduire à une très faible incidence sur la transmission lumineuse du vitrage.

Les couches obtenues par pulvérisation cathodique sont généralement décrites comme "tendres". Leur résistance mécanique à l'abrasion notamment, est bien inférieure à celle des couches obtenues par pyrolyse. Cette particularité fait qu'elles sont utilisées sur des faces des feuilles qui ne sont pas exposées aux risques mécaniques. Dans le cas de l'invention la couche écran est nécessairement sur une face "interne" du vitrage, et cette relative fragilité ne peut se manifester que jusqu'à l'assemblage des éléments constituant ce vitrage.

Les couches de dioxyde de titane et celles modifiées par incorporation à ce dioxyde de métaux du groupe indiqué précédemment sont particulièrement avantageuses. Leur présence ne réduit que peu la transmission lumineuse et surtout, elles présentent une grande inertie chimique et une bonne résistance mécanique, même sous une très faible épaisseur. Les meilleurs résultats sont obtenus avec les couches d'oxyde de titane modifiées.

Pour ces matériaux, l'épaisseur des couches peut être de moins de 100 Å, ou même moins de 60 Å, sans que le rôle d'écran soit insuffisant.

Pour évaluer la qualité des produits selon l'invention à prévenir l'apparition de défauts à l'interface entre la couche intumescente de silicate alcalin et de la face "étain" d'une feuille de verre, le vitrage est soumis à une épreuve connue de vieillissement accéléré. L'épreuve consiste à soumettre le vitrage à une température de 80°C pendant au moins 20 jours. Ce vieillissement est l'équivalent d'une utilisation dans des conditions de température ambiante ordinaire, pendant 10 ans.

Pour répondre de façon satisfaisante aux exigences de l'invention, les vitrages soumis au vieillissement accéléré ne doivent pas de préférence conduire à une réduction de leur transmission lumineuse de plus de 3%, et de préférence cette réduction ne doit pas être de plus de 2%. L'apparition d'un voile (haze) correspondant à la diffusion de la lumière en transmission ne doit pas dépasser de préférence 3% et de préférence pas 2% du flux incident. La mesure du "haze" fait l'objet de la norme "ASTM Designation D 1003-61 reapproved 1988"

Indépendamment de la transmission lumineuse, il est préférable que la présence de la couche écran prévienne une modification de la couleur en transmission du vitrage. Le contact des couches intumescentes de silicate alcalin hydraté avec la face "étain" des feuilles de verre peut conduire à l'apparition d'une légère coloration. Pour être parfaitement satisfaisante, la variation de coloration à l'issue de l'épreuve de vieillissement accéléré doit être très réduite. Cette coloration et sa variation sont exprimées par la formule :

$$\Delta E = [(\Delta L^*)^2 + (\Delta a^*)^2 + (\Delta b^*)^2]^{1/2}$$

Dans cette formule les paramètres L*, a*, b* sont les données colorimétriques dans le système "Hunter".

Selon l'invention la variation $\Delta E$ est de préférence inférieure à 4 après vieillissement et avantageusement inférieure à 2.

L'invention est décrite dans la suite en faisant référence aux figures jointes dans lesquelles :

- la figure 1 est une représentation schématique d'un vitrage résistant au feu de l'art antérieur ;
- la figure 2 est un vitrage analogue au précédent correspondant à la mise en oeuvre de l'invention.

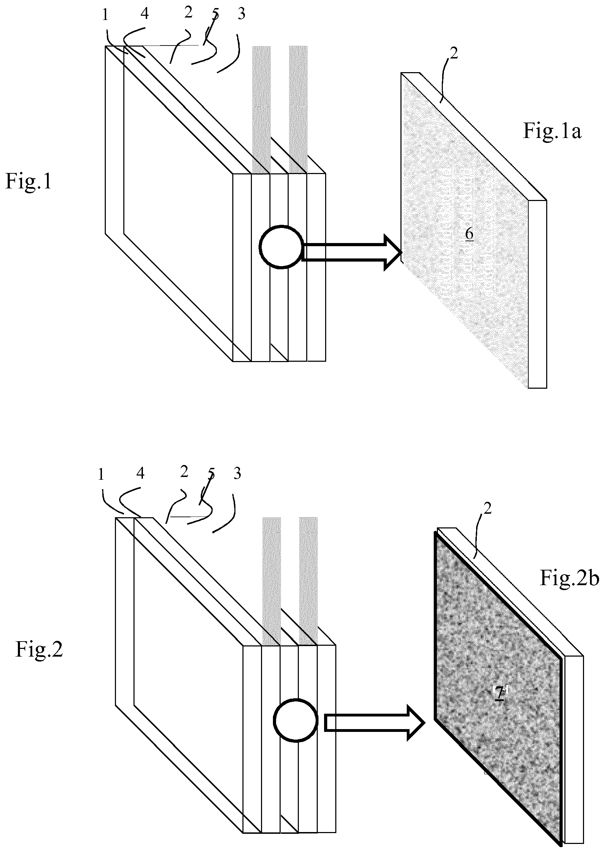

La figure 1 représente un vitrage pour lequel le problème résolu par l'invention est susceptible de se produire. Ce vitrage est composé de trois feuilles de verre, 1, 2 et 3 qui sont réunies par deux couches de silicate alcalin intumescent, 4 et 5.

Compte tenu de la configuration du vitrage une des faces de la feuille de verre centrale 2 est une face ayant été au contact du bain d'étain dans la fabrication de la feuille. Sur la figure la, cette feuille centrale est isolée, et la face "étain" 6 est représentée avec un léger grisé qui n'a pour but que de la distinguer sur la figure.

Il va de soi que les feuilles de verre 1 et 3 présentent également chacune une face "étain". Pour éviter le contact de cette face avec la composition de la couche intumescente, ces faces sont systématiquement les faces externes du vitrage. Mais si pour une raison quelconque ces faces devaient aussi se trouver au contact des couches intumescentes, elles seraient de la même manière revêtues comme proposé selon l'invention.

La figure 2 et la figure 2b, sont des représentations analogues à celles des figures précédentes dans lesquelles une couche "écran" 7 d'un des matériaux proposés selon l'invention, est appliquée sur la face "étain" 6 de la feuille de verre centrale 2, préalablement à l'assemblage du vitrage. Pour la clarté de l'illustration de la figure 2b cette couche est représentée distincte de la feuille de verre 2. Il va de soi qu'en fait elle est appliquée sur cette feuille de verre à laquelle elle adhère parfaitement. La couche est aussi représentée grisée, mais en pratique elle est essentiellement transparente.

A titre d'exemples, des vitrages tels que représentés à la figure 2 ont été produits. Ces vitrages étaient constitués de trois feuilles de verre de 3mm d'épaisseur chacune, et de deux couches intumescentes de silicate de sodium hydraté de 2mm d'épaisseur.

La nature des couches de silicate de sodium hydraté était ; un rapport molaire $SiO_2/Na_2O$ de 4,6, une teneur en poids d'eau de 30%, et une teneur en éthylène-glycol de 4% en poids.

Le vitrage de référence est sans couche écran. La mesure du voile après vieillissement, pour ce vitrage, est très supérieure à 5% et peut atteindre 15%.

Des exemples sont réalisés avec des couches déposées par pulvérisation cathodique. Les couches sont respectivement d'oxyde de titane épaisseur 30 et 60 Â, d'oxyde de titane modifié par du zirconium (TZO), avec 35% d'atomes de zirconium par rapport à l'ensemble des métaux titane et zirconium, de 20, 60 et 100 Â d'épaisseur.

Le tableau suivant donne pour ces différents ensembles la transmission lumineuse initiale et après vieillissement, et les valeurs de voile et de variation de couleur toujours après vieillissement.

|  | TL initiale | TL finale | Voile | $\Delta E$ |
|---|---|---|---|---|
| TiO$_2$ 30 Â | 87,2 | 85 | 0,6 | 1 |
| TiO$_2$ 60 Â | 86,8 | 85 | 0,4 | 1 |
| TZO 20 Â | 85 | 85 | 0,8 | 1 |
| TZO 60 Â | 85 | 85 | 0,6 | 1 |
| TZO 100 Â | 85 | 85 | 0,7 | 0,75 |

Les valeurs relevées montrent une très bonne stabilité des propriétés optiques des vitrages composés selon l'invention. Ce résultat est obtenu même avec des couches écran de très faible épaisseur.

## Revendications

1. Vitrage anti-feu comprenant plus de 2 feuilles de verre séparées par des couches de matériau intumescent à base de silicate alcalin hydraté, au moins une face "étain" d'une des feuilles étant au contact du matériau intumescent, **caractérisé en ce que** cette face est revêtue d'une couche mince essentiellement transparente, dont l'épaisseur n'est pas supérieure à 200 Â, couche déposée par pulvérisation cathodique assistée par magnétron, d'un matériau qui résiste au contact de la composition intumescente de silicate alcalin hydraté, du groupe comprenant : le dioxyde de titane, le dioxyde de titane modifié par l'incorporation d'un métal du groupe comprenant Zr, Nb, Ta, Hf, V, Ce, W, Mo, Al, le métal de modification représentant au plus 40% atomique de l'ensemble des métaux, l'oxyde d'étain, l'oxyde d'étain dopé, le stanate de zinc comprenant au plus 50% atomique de Zn, d'oxyde de zinc éventuellement dopé..

2. Vitrage selon la revendication 1 dans lequel l'épaisseur de la couche mince est choisie de telle sorte que la transmission lumineuse n'est pas diminuée de plus de 5%, par rapport à la même structure exempte de cette couche .

3. Vitrage selon la revendication 2 dans lequel la couche mince présente une épaisseur qui n'est pas supérieure à 100 Â.

4. Vitrage selon l'une des revendications précédentes dans lequel la variation de transmission lumineuse après l'épreuve de vieillissement de 20 jours à 80°C n'est pas supérieur 3% et de préférence pas supérieur à 2%.

5. Vitrage selon l'une des revendications 1 à 3 dans lequel la variation de couleur après vieillissement accéléré $\Delta E=[(\Delta L^*)^2+(\Delta a^*)^2+(\Delta b^*)^2]^{1/2}$, reste inférieure à 4 et de préférence inférieure à 2.

6. Vitrage selon l'une des revendications 1 à 3 dans lequel après vieillissement l'apparition d'un voile reste inférieure à 3% et de préférence inférieure à 2% de la lumière incidente.

## Patentansprüche

1. Brandschutzverglasung, umfassend mehr als 2 Glasscheiben, die durch Schichten aus intumeszierendem Material auf Basis von hydratisiertem Alkalisilikat getrennt sind, wobei mindestens eine "Zinn"-Seite einer der Scheiben mit dem intumeszierenden Material in Kontakt steht, **dadurch gekennzeichnet, dass** diese Seite mit einer weitgehend transparenten dünnen Schicht beschichtet ist, deren Dicke höchstens 200 Ä beträgt, wobei die Schicht durch Magnetronunterstützte Kathoden zerstäubung eines gegenüber Kontakt mit der intumeszierenden Zusammensetzung von hydratisiertem Alkalisilikat resistenten Materials aus der Gruppe umfassend Titandioxid, durch Einbau eines Metalls aus der Gruppe umfassend Zr, Nb, Ta, Hf, V, Ce, W, Mo und Al modifiziertes Titandioxid, wobei das Modifizierungsmetall höchstens 40 Atom-% der gesamten Metalle ausmacht, Zinnoxid, dotiertes Zinnoxid, Zinkstannat mit höchstens 50 Atom-% Zn und gegebenenfalls dotiertes Zinkoxid abgeschieden wurde.

2. Verglasung nach Anspruch 1, wobei die Dicke der dünnen Schicht so gewählt ist, dass die Lichttransmission gegenüber der gleichen Struktur ohne diese Schicht um nicht mehr als 5 % verringert ist.

3. Verglasung nach Anspruch 2, wobei die dünne Schicht eine Dicke von höchstens 100 Å aufweist.

4. Verglasung nach einem der vorhergehenden Ansprüche, wobei die Variation der Lichttransmission nach Alterungstest über einen Zeitraum von 20 Tagen bei 80 °C höchstens 3 % und vorzugsweise höchstens 2 % beträgt.

5. Verglasung nach einem der Ansprüche 1 bis 3, wobei die Variation der Farbe nach beschleunigter Alterung $\Delta E = [(\Delta L^*)2 + (\Delta a^*)2 + (\Delta b^*)2]1/2$ unter 4 und vorzugsweise unter 2 bleibt.

6. Verglasung nach einem der Ansprüche 1 bis 3, wobei nach Alterung das Auftreten einer Trübung unter 3 % und vorzugsweise unter 2 % des einfallenden Lichts bleibt.

## Claims

1. Fire-resistant glazing comprising more than two glass sheets separated by layers of intumescent material based on hydrated alkali metal silicate, at least one "tin" face of one of the sheets being in contact with the intumescent material, **characterized in that** this face is coated with a thin layer which is essentially transparent, the thickness of which is not greater than 200 Å, which layer is deposited by magnetron-assisted cathode sputtering, of a material which withstands contact with the intumescent hydrated alkali metal silicate composition from the group consisting of: titanium dioxide, titanium dioxide modified by the incorporation of a metal from the group consisting of Zr, Nb, Ta, Hf, V, Ce, W, Mo and Al, the modification metal representing at most 40 atom% of the combined metals, tin oxide, doped tin oxide, zinc stannate comprising at most 50 atom% of Zn, and optionally doped zinc oxide.

2. Glazing according to Claim 1, in which the thickness of the thin layer is chosen so that the light transmission is not reduced by more than 5%, with respect to the same structure devoid of this layer.

3. Glazing according to Claim 2, in which the thin layer exhibits a thickness which is not greater than 100 Å.

4. Glazing according to one of the preceding claims, in which the variation in light transmission after the test of ageing for 20 days at 80°C is not greater than 3% and preferably not greater than 2%.

5. Glazing according to one of Claims 1 to 3, in which the variation in colour after accelerated ageing $\Delta E=[(\Delta L^*)^2+(\Delta a^*)^2+(\Delta b^*)^2]^{1/2}$ remains less than 4 and preferably less than 2.

6. Glazing according to one of Claims 1 to 3, in which, after ageing, the appearance of a haze remains less than 3% and preferably less than 2% of the incident light.

Fig.1

Fig.1a

Fig.2

Fig.2b